Europäisches Patentamt

European Patent Office

Office européen des brevets

(11) Veröffentlichungsnummer: **0 131 149**
**A1**

(12) **EUROPÄISCHE PATENTANMELDUNG**

(21) Anmeldenummer: **84106372.0**

(22) Anmeldetag: **05.06.84**

(51) Int. Cl.⁴: **F 16 B 12/14**

(30) Priorität: **10.06.83 DE 3320962**

(43) Veröffentlichungstag der Anmeldung:
**16.01.85 Patentblatt 85/3**

(84) Benannte Vertragsstaaten:
**AT BE CH FR GB IT LI LU NL SE**

(71) Anmelder: **Pfeifer, Peter**
**Am Weiher 1**
**D-6147 Lautertal-Schannenbach(DE)**

(72) Erfinder: **Pfeifer, Peter**
**Am Weiher 1**
**D-6147 Lautertal-Schannenbach(DE)**

(74) Vertreter: **Rasper, Joachim, Dr.**
**Bierstadter Höhe 22**
**D-6200 Wiesbaden(DE)**

(54) **Eckverbindung.**

(57) Eine Eckverbindung für miteinander zu verbindende Möbelteile, wie Zargen und Füße von Tischen oder Stühlen, besteht aus einer ersten Schraube (4), die in einen Gewindestopfen (5) in einem der zu verbindenden Teile einschraubbar ist und ein quer zu ihrer Längsrichtung eingeschnittenes Loch (3) aufweist, und aus einer zweiten Schraube (2), die durch dieses Loch (3) hindruch senkrecht zu dieser ersten Schraube und in der gleichen waagerechten Ebene wie diese in einen Gewindestopfen (5') in dem anderen der zu verbindenden Teile einschraubbar ist.

EP 0 131 149 A1

ECKVERBINDUNG

Beschreibung

Die vorliegende Erfindung betrifft eine Eckverbindung, insbesondere für Möbel, wie beispielsweise Tische und Stühle.

Normalerweise werden derartige Verbindungen auf der Innenseite im Eck Zarge-Fuß angebracht. Es sind jedoch auch bereits andere Vorrichtungen bekannt, mittels derer Möbelteile über Eck miteinander verbunden werden können. Beispielsweise beschreibt die DE-OS 20 13 450 eine Vorrichtung zum Verbinden mehrerer Platten aus Holz, Kunststoff oder dergleichen, insbesondere für die Möbelfabrikation, die ein zwischen die miteinander zu verbindenden Platten setzbares Anschlußprofil aufweist, welches rechtwinklig abstehende Verbindungsstifte trägt, die in entsprechende Bohrungen in den Stirnflächen der miteinander zu verbindenden Platten eintreten können, wo sie mittels Spannstopfen gesichert werden können.

Diese bekannte Vorrichtung hat den Nachteil, daß sie sich, sollte sie sich einmal gelockert haben, nicht nachziehen läßt.

Aus der DD-PS 125 985 ist eine Möbelverbindung bekannt, bei welcher zwei an ein Eckprofil anstoßende Teile dadurch miteinander verbunden werden, daß eine erste Schraube durch das Eckprofil hindurch in das eine der beiden miteinander zu verbindenden Teile geschraubt wird und eine zweite Schraube rechtwinklig zu dieser ersten Schraube und in einer anderen Höhe als diese durch das Eckprofil hindurch in das andere der beiden miteinander zu verbindenden Teile geschraubt wird.

Häufig ist bei Übereckverbindungen in dem Eckprofil gar kein Platz für zwei übereinander anzubringende Bohrungen, oder die Bohrungen liegen so nahe beieinander, daß die Stabilität des Eckprofils gefährdet ist.

0131149

Um eine verwindungsfeste Übereckverbindung zu erzielen, müssen aber sogar mindestens zwei Schrauben in jeder Richtung, also vier Schrauben übereinander durch das Eckprofil hindurch geschraubt werden, oder es muß ein zusätzlicher winkelförmiger Beschlag, der außen sichtbar ist, verwendet werden. Dadurch werden Herstellung und Lagerhaltung verteuert und Stabilität und Aussehen des Möbelteiles verschlechtert.

Ziel der vorliegenden Erfindung ist daher eine Verbindung über Eck von beliebigen Teilen, insbesondere von Möbelteilen, wie Zargen und Beinen von Tischen und Stühlen, bei der im Vergleich zur DD-PS 125 985 nur halb so viel Platz zum Unterbringen der Schrauben benötigt wird und ein zusätzlicher Beschlag zur Erzielung von verwindungssteifigkeit entbehrlich ist, bei der jedoch die Teile ebenfalls von außen so miteinander verschraubt werden, daß die Schrauben jederzeit nachgezogen werden können und ein Ausgleich von fabrikationstechnisch bedingten Toleranzen möglich ist, so daß eine große Stabilität der zusammengebauten Möbel gewährleistet ist. Dieses Ziel wird mit einer Eckverbindung gemäß dem Patentanspruch erreicht.

Die neue Eckverbindung besteht im wesentlichen aus zwei Verbindungselementen, nämlich einer ersten Schraube mit zylindrischem Kopf, die die entscheidende Neuerung auf dem Gebiete der Möbeleckverbindungen darstellt und die in das eine der beiden miteinander zu verbindenden Teile einschraubbar ist, und aus einer zweiten Schraube, die in das andere der miteinander zu verbindenden Teile einschraubbar ist. Die erste Schraube weist eine Bohrung auf, die quer zu ihrer Längsrichtung eingeschnitten ist, und die zweite Schraube wird bei der Herstellung der Eckverbindung durch diese Bohrung hindurchgesteckt, so daß sich die beiden Verbindungselemente kreuzweise durchdringen.

Jedes dieser beiden Verbindungselemente wird durch ein Eckprofil hindurch in jeweils eines der miteinander zu verbindenden Teile eingeschraubt, und zwar mit Hilfe eines Gewindestopfens, der in ein Sackloch in jedem der beiden zu verbindenden Teile einsetzbar ist. An diesem Eckprofil liegen die miteinander zu verbindenden Teile mit Stirnflächen an, und durch dieses Eckprofil hindurch sind die beiden Verbindungselemente in die entsprechenden Möbelteile einschraubbar. Ein solches Eckprofil stellen bei Tischen und Stühlen die Füße dar; d. h., die erfindungsgemäße Vorrichtung dient in solchen Fällen der Verbindung eines Fußes mit zwei Zargen. Die neue Vorrichtung ist jedoch auch zum Verbinden von beliebigen zwei Teilen geeignet, wenn ein zusätzliches Eckprofil verwendet wird.

Das Eckprofil (beispielsweise das Stuhlbein) weist entsprechende Bohrungen auf, die sich über Kreuz durchdringen, eine stärkere für die erste Schraube und eine schwächere für die zweite Schraube.

Die erste Schraube besitzt an ihrem in das Möbelteil hineinragenden Ende eine Gewindestange, mittels derer sie in den genannten GEwindestopfen einschraubbar ist. Im vorderen Abschnitt, der in das Eckprofil zu liegen kommt, weist sie einen länglichen, zylindrischen Kopf auf, und in diesen zylindrischen Kopf ist senkrecht zur Schraubenlängsrichtung eine Bohrung (Langloch) eingeschnitten. An ihrem äußeren Ende weist sie ein Innengewinde, in das eine Kopfschraube einschraubbar ist, oder ein Außengewinde auf, auf das eine Hülsenmutter aufschraubbar ist. In das Ende dieses Gewindes ist ein Schraubschlitz geschnitten.

Damit die erfindungsgemäße Verbindung nachstellbar ist, ist nicht nur die in die erste Schraube eingeschnittene Bohrung als Langloch ausgebildet, sondern ist auch diese Schraube so dimensioniert, daß nach dem Einstecken der ersten Schraube in das Eckprofil das freie Ende des zylindrischen Kopfes mit einem Spiel von beispielsweise 4 mm von der Stirnseite des Eckprofils absteht.

Für kleinere Möbel genügt ein Paar der beschriebenen Verbindungselemente. In der Regel werden jedoch, um eine ausreichende Stabilität zu erzielen, mindestens zwei Paare von Verbindungselementen untereinander an dem Eckprofil angeordnet.

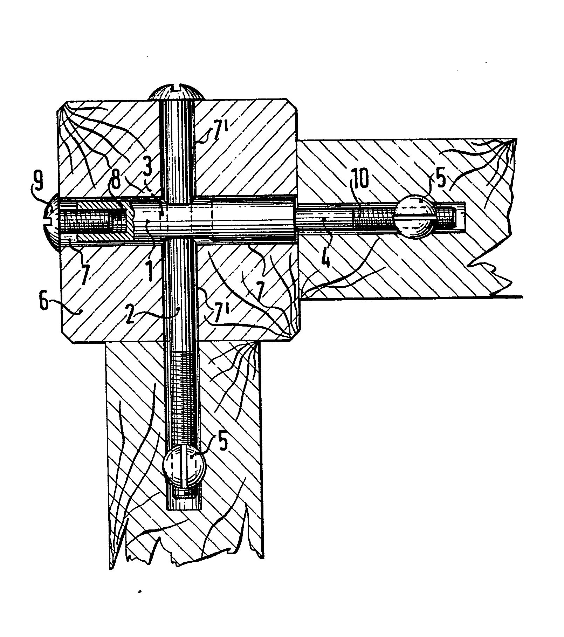

Die Erfindung wird anhand der Zeichnung näher erläutert, in der in einem waagerechten Schnitt ein Beispiel für eine erfindungsgemäße Eckverbindung dargestellt ist: Durch das Eckprofil 6 sind dickere Bohrungen 7 und dünnere Bohrungen 7' geschnitten; durch die dickere Bohrung 7 ist die erste Schraube 4 gesteckt, die einen länglichen zylindrischen Kopf 1 aufweist, der außen ein Innengewinde 8 hat, in das eine Kopfschraube 9 eingeschraubt ist; mittels seines Schraubgewindes 10 ist die erste Schraube 4 in den Gewindestopfen 5 eingeschraubt, der lose in einem Sackloch steckt, das in die eine Zarge eingeschnitten ist. Durch die dünnere Bohrung 7' ist die zweite Schraube 2 gesteckt, die durch das Langloch 3 im Bolzen 4 hindurchgeht und in den Gewindestopfen 5' eingeschraubt ist, welcher ebenfalls lose in einem Sackloch in der anderen Zarge steckt.

Dank der vorliegenden Erfindung ist es nicht nur möglich, die Eckverbindung später jederzeit nachzustellen, sondern es ist insbesondere möglich, das Möbelstück in lauter Einzelteilen (Beispiel Tisch: 4 Stück Zargen, 4 Stück Füße, Tischplatte) in einem Karton verpackt beim Käufer anzuliefern, der den Tisch leicht selbst zusammenbauen kann. Beim Zusammenbau werden als erstes die Gewindestopfen in die Sacklöcher gesteckt und mittels eines Schraubenziehers in die richtige Stellung gebracht. Danach werden die ersten Schrauben in die Stirnseite einer Zarge gesteckt, in den Gewindestopfen geschraubt und so lange angedreht, bis die Schrauben fest an der Zarge sitzen. Jetzt wird der Fuß (das Eckprofil) auf die herausragenden zylindrischen Köpfe der Schrauben aufgeschoben.

Auf der anderen Seite des Fußes werden die zweiten Schrauben

0131149

durch die entsprechenden Löcher gesteckt, so daß sie durch
die Langlöcher in den Bolzen hindurchgehen, und werden in
die Gewindestopfen geschraubt, die in der anderen Zarge
stecken.

Schließlich werden die Kopfschrauben in das Innengewinde am
Außenende der ersten Schrauben eingeschraubt.

Patentanspruch

Vorrichtung zur Verbindung über Eck von zwei an ein Eckprofil anstoßenden Teilen, bestehend aus einer ersten und einer zweiten Schraube und aus zwei Gewindestopfen, die in die beiden zu verbindenden Teile in dafür vorgesehene Sacklöcher einsetzbar sind und in die die beiden Schrauben einschraubbar sind, dadurch gekennzeichnet, daß die eine (4) dieser Schrauben einen länglichen zylindrischen Kopf (1) besitzt, der ein senkrecht zur Schraubenlängsrichtung eingeschnittenes Langloch (3) aufweist, durch das die zweite (2) Schraube hindurchsteckbar ist, so daß sich die beiden Schrauben (4, 2) kreuzweise durchdringen, und daß die Schraube (4) an ihrem außenseitigen dem Schraubgewinde abgewandten Ende ein Innen (8)- bzw. Außengewinde aufweist, in bzw. auf welches eine Kopfschraube (9) bzw. eine Hülsenmutter ein- bzw. aufschraubbar ist.

1/1

**0131149**

Europäisches
Patentamt

**EUROPÄISCHER RECHERCHENBERICHT**

Nummer der Anmeldung

EP 84 10 6372

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-A-1 625 388 (E. LUST KG) <br> * Figur 1 * <br><br>--- | 1 | F 16 B 12/14 |
| Y | DE-U-1 929 679 (SCHULTZE-BONATZ) <br> * Figur 15 * <br><br>--- | 1 | |
| Y | DE-U-7 502 627 (P. HENKE) <br> * Figur 1 * <br><br>--- | 1 | |
| Y | DE-U-7 602 494 (IKEA) <br> * Figur 1 * <br><br>--- | 1 | |
| Y | DE-U-7 715 076 (ITW-ATECO) <br> * Figur 6 * <br><br>--- | 1 | |

| | | | RECHERCHIERTE SACHGEBIETE (Int. Cl. ³) |
|---|---|---|---|
| Y | FR-A-1 331 299 (PICHARD) <br> * Figur 12 * <br><br>--- | 1 | F 16 B 5/00 <br> F 16 B 12/00 |
| Y | FR-A-1 547 784 (HOLZINGER) <br> * Figur 2 * <br><br>--- | 1 | |
| Y | GB-A-1 410 970 (CERCELET et al.) <br> * Figur 3 * <br><br>--- | 1 | |
| Y | US-A-2 238 226 (LINDGREN) <br> * Figur 1 * <br><br>---        -/- | 1 | |

Der vorliegende Recherchenbericht wurde für alle Patentansprüche erstellt.

| Recherchenort <br> BERLIN | Abschlußdatum der Recherche <br> 29-08-1984 | Prüfer <br> ZAPP E |
|---|---|---|

Europäisches
Patentamt

**EUROPÄISCHER RECHERCHENBERICHT**

**0131149**
Nummer der Anmeldung

EP 84 10 6372

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | US-A-4 261 665  (HSIUNG) <br> * Figur 2 * <br><br> ----- | 1 | |

RECHERCHIERTE
SACHGEBIETE (Int. Cl. ³)

Der vorliegende Recherchenbericht wurde für alle Patentansprüche erstellt.

| Recherchenort <br> BERLIN | Abschlußdatum der Recherche <br> 29-08-1984 | Prüfer <br> ZAPP E |
|---|---|---|

KATEGORIE DER GENANNTEN DOKUMENTEN
X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82